# EUROPÄISCHE PATENTANMELDUNG

(11) **EP 4 387 063 A1**
(43) Veröffentlichungstag der Anmeldung: **19.06.2024**
(21) Anmeldenummer: 23217321.1
(22) Anmeldetag: 15.12.2023
(51) Int. Cl.: H02K 35/02, H02K 35/06

(54) **GENERATOR ZUR ERZEUGUNG VON ELEKTRISCHEM STROM**

(30) Priorität: 15.12.2022 DE 102022004727
(71) Anmelder: Ataol, Cinar, 23966 Wismar (DE)
(72) Erfinder: Ataol, Cinar, 23966 Wismar (DE)
(74) Vertreter: Hauck Patentanwaltspartnerschaft mbB

(57) **Zusammenfassung**

Elektrischer Generator mit einem Gehäuse wobei
a. mindestens eine Stromerzeugungseinheit, die einen ersten und einen zweiten Magneten, eine erste Spule zur Stromerzeugung und ein erstes sowie ein zweites Magnetfeldmanipulationsmittel umfasst, wobei
b. die Magneten sowie die Spule an dem Gehäuse befestigt sind,
c. die Spule zwischen den Magneten angeordnet ist,
d. die Magnetfeldmanipulationsmittel über Anschlussmittel zum Anschließen an einen mechanischen Antrieb verfügen,
e. jeweils ein Magnetfeldmanipulationsmittel in einem Zwischenraum zwischen einem Magneten und der Spule angeordnet ist,
f. die Magnetfeldmanipulationsmittel mit Lagermittel derart beweglich an dem Gehäuse befestigt sind, dass sie jeweils entlang eines gehäusefesten Bewegungspfads bewegbar sind,
g. ein Magnetfeldmanipulationsmittel jeweils mehrere Manipulationssegmente aufweist, die entlang des jeweiligen Bewegungspfads hintereinander angeordnet sind,
h. entlang eines Bewegungspfads direkt aufeinander folgende Manipulationssegmente jeweils eine verschiedene Dicke aufweisen und/oder aus unterschiedlichen Materialien gebildet sind, die sich dadurch unterscheiden, dass
i. sich die Permeabilität des Materials eines Manipulationssegmentes von den Permeabilitäten der Materialien der direkt vorher und hinterher angeordneten Manipulationssegmente unterscheidet und/oder
ii. sich die Magnetisierungsrichtung und/oder Magnetisierung des Materials eines Manipulationssegmentes von den Magnetisierungsrichtungen und/oder Magnetisierungen der direkt vorher und hinterher angeordneten Manipulationssegmente unterscheidet, und

i. die Bewegungspfade so verlaufen, dass bei einer Bewegung eines Magnetfeldmanipulationsmittels dessen Manipulationssegmente durch den jeweiligen Zwischenraum bewegt werden.

## Beschreibung

Die vorliegende Erfindung betrifft einen Generator zur Erzeugung von elektrischem Strom.

Generatoren dienen zur Erzeugung von elektrischem Strom. Dabei wird mechanische in elektrische Leistung umgewandelt. Hierzu wird das Prinzip der Induktion ausgenutzt. Dabei wird durch eine Bewegung eines Leiters relativ zu einem Magnetfeld oder durch die Veränderung der Flussdichte eines Magnetfeldes, in dem sich eine Leiterschleife befindet, eine abgreifbare elektrische Spannung in den Leiter bzw. in die Leiterschleife induziert.

Übliche Generatoren sind so aufgebaut, dass Magnete auf einem sich drehenden Rotor und Spulen auf einem Stator angeordnet sind. Durch eine Drehung des Rotors werden die Spulen infolge der Drehung mit einem sich verändernden Magnetfeld beaufschlagt. In die Spulen wird dann eine elektrische Spannung induziert, die zur Erzeugung eines Stromflusses genutzt werden kann. Es werden mechanische Antriebe eingesetzt, wie bspw. Turbinen in einem Kraftwerk oder auch Kolbenmaschinen in mobilen Generatoren, um den Rotor zu drehen.

Aus der JP 2017 208956 A ist ein Generator bekannt geworden, der einen Magneten und eine Spule aufweist, die zueinander fest angeordnet sind. Ein Magnetfeldveränderungsmittel wird zur Veränderung des Magnetfeldes, das von dem Magneten ausgeht und auf die Spule einwirkt, in dem Zwischenraum zwischen Magnet und Spule bewegt. Das Magnetfeldveränderungsmittel kann beispielsweise ein Rahmen mit Aussparungen sein, wobei in die Aussparungen auch Magneten eingesetzt sein können.

Ausgehend hiervon liegt der Erfindung die Aufgabe zugrunde, einen effizienten und kompakten Generator mit vereinfachtem mechanischen Aufbau zur Verfügung zu stellen.

Die Aufgabe wird durch einen elektrischen Generator nach Anspruch 1 gelöst. Vorteilhafte Ausführungsarten sind in der Beschreibung und in den abhängigen Ansprüchen dargestellt.

Der erfindungsgemäße elektrische Generator weist ein Gehäuse und mindestens eine Stromerzeugungseinheit auf. Eine Stromerzeugungseinheit weist einen ersten und einen zweiten Magneten, eine erste Spule zur Stromerzeugung sowie ein erstes sowie ein zweites Magnetfeldmanipulationsmittel auf. Zur Stromerzeugung weisen die Spulen Mittel auf, mit denen eine induzierte Spannung in einen Stromfluss umgewandelt werden kann. Bevorzugt handelt es sich dabei um einen Kommutator.

Der Magnet und die Spule sind an dem Gehäuse befestigt. Mithin ist ihre Ausrichtung zueinander fixiert. Die Spule ist zwischen den Magneten angeordnet, sodass sie sich in dem von den Magneten ausgehenden Magnetfeld befindet. Vorzugsweise sind dabei die Magnete so ausgebildet und die Spule so zu den Magneten ausgerichtet, dass sich ein homogenes Magnetfeld im Bereich der Spule ausbilden kann, wenn die Magnetfeldmanipulationsmittel ausgebaut sind.

Die Magnetfeldmanipulationsmittel verfügen über Anschlussmittel, mit denen sie an einen mechanischen Antrieb anschließbar sind, durch den sie bewegt werden können. Die Magnetfeldmanipulationsmittel befinden sich jeweils in einem Zwischenraum zwischen einem Magneten und der Spule. Dabei sind sie mittels Lagermitteln derart an dem Gehäuse beweglich befestigt, dass sie jeweils entlang eines gehäusefesten Bewegungspfads bewegbar sind. Die Bewegungspfade definieren somit jeweils eine Bewegungsrichtung. Die Magnetfeldmanipulationsmittel weisen jeweils mehrere Manipulationssegmente auf, die entlang des jeweiligen Bewegungspfads hintereinander angeordnet sind.

Direkt hintereinander angeordnete Manipulationssegmente weisen verschiedene Dicken auf und/oder sind jeweils aus einem anderen Material gebildet. Das Material eines Manipulationssegmentes unterscheidet sich hinsichtlich seiner Permeabilität von den Materialien der direkt vorher und hinterher angeordneten Manipulationssegmente. Alternativ oder ergänzend unterscheidet sich das Material eines Manipulationssegmente hinsichtlich seiner Magnetisierungsrichtung und/oder Magnetisierung von den Materialien der vorher und hinterher angeordneten Manipulationssegmente. Dabei kann in diesem Fall ein Unterschied zwischen den Materialien alleine durch ihre verschiedenen magnetischen Eigenschaften bedingt sein, auch wenn sie aus denselben Werkstoffen gefertigt sind.

Die Bewegungspfade verlaufen so, dass bei einer Bewegung eines Magnetfeldmanipulationsmittel dessen Manipulationssegmente durch den jeweiligen Zwischenraum, in dem die Magnetfeldmanipulationsmittel angeordnet sind, bewegt werden. In der Folge befinden sich im Laufe der Bewegung Manipulationssegmente mit verschiedenen Dicken und/oder Materialien in dem jeweiligen Zwischenraum zwischen den Magneten und der Spule.

Um eine elektrische Spannung in die Spule zu induzieren, wird das Magnetfeld, in dem sich die Spule befindet, immer wieder durch die Bewegung eines Magnetfeldmanipulationsmittel bzw. beider Magnetfeldmanipulationsmittel verändert. Um die Veränderungen des Magnetfeldes zu bewirken, weist ein Magnetfeldmanipulationsmittel jeweils mehrere Manipulationssegmente auf. Die Manipulationssegmente sind fest mit den Magnetfeldmanipulationsmitteln verbunden und weisen verschiedene Dicken auf und/oder sind aus verschiedenen Materialien gebildet, wobei sich die Materialien hinsichtlich ihrer Permeabilität und/oder ihrer Magnetisierung und/oder Magnetisierungsrichtung unterscheiden. Sobald die Manipulationssegmente im jeweiligen Zwischenraum bewegt werden, ändert sich infolge der verschiedenen Dicken bzw. Materialeigenschaften das Magnetfeld im Zwischenraum. Das hat zur Folge, dass sich auch im Bereich der Spule das Magnetfeld verändert, was mit einer Änderung der Flussdichte einhergeht, wodurch wiederum eine Spannung in die Spule induziert wird.

Die Veränderung des Magnetfeldes wird in dem Fall, dass die Manipulationssegmente verschiedene Dicken aufweisen und/oder aus Materialen mit verschiedener Permeabilität bestehen, durch eine Veränderung des magnetischen Widerstands verändert. Ein dickeres Manipulationssegment oder eines, das aus einem Material mit niedrigerer Permeabilität besteht, sorgt im Vergleich zu einem dünneren Manipulationssegment oder einem aus einem Material mit höherer Permeabilität gebildeten Manipulationssegment dafür, dass im Zwischenraum ein höherer magnetischer Widerstand vorliegt. In der Folge sinkt die magnetische Flussdichte auch im Bereich der Spule.

Die Veränderungen der magnetischen Flussdichte im Bereich der Spule kann aber auch dadurch erreicht werden, dass die Manipulationssegmente selber magnetische Eigenschaften aufweisen. In der Folge befinden sich immer wieder abwechselnd verschiedene zusätzliche Magneten im Zwischenraum, die eine Veränderung des Magnetfeldes bewirken. Insbesondere kann durch eine entsprechende Ausrichtung der Magnetisierungsrichtung der Manipulationssegmente dafür gesorgt werden, dass ein Teil der magnetischen Feldlinien soweit abgelenkt wird, dass sich die Spule nicht mehr in deren Einflussbereich befindet und damit das Magnetfeld, in dem sich die Spule befindet, eine geringe magnetische Flussdichte aufweist.

Das Besondere an dem erfindungsgemäßen elektrischen Generator ist, dass weder die Spule noch die Magneten bewegt werden müssen. Stattdessen müssen lediglich die Magnetfeldmanipulationsmittel bewegt werden. Diese können deutlich kleiner und leichter ausgeführt werden, als dies beispielsweise bei einem Rotor mit Magneten der Fall ist. Auf diese Weise kann mit dem erfindungsgemäßen Generator ein vereinfachter Aufbau insbesondere hinsichtlich der Mechanik realisiert werden. Es können beispielsweise weniger aufwändige Lager verwendet werden als solche, die einen schweren, mit Magneten bestückten Rotor tragen können. Ebenfalls kann eine mitunter aufwändige Wuchtung eines magnetbestückten Rotors entfallen.

Ferner weist der erfindungsgemäße Generator eine Anordnung auf, bei der sich eine Spule zwischen zwei Magneten befindet. Auf diese Weise kann sich, zumindest sofern der Einfluss der Magnetfeldmanipulationsmittel vernachlässigt wird, ein homogenes Magnetfeld im Bereich der Spule ausbilden. Auch kann durch die Verwendung von zwei Magneten erreicht werden, dass eine hohe magnetische Flussdichte auf die Spule einwirkt. Dadurch sind insbesondere die Effizienz und Leistungsausbeute bei gleichem Bauraum hoch.

Gemäß einer Ausführungsart weisen die Spule eine Hauptausdehnungsrichtung und die Magnete jeweils einen Nord- sowie Südpol auf, wobei Nord- und Südpol jeweils eine Magnetisierungsrichtung definieren, die Spule und die Magneten so angeordnet sind, dass die Hauptausrichtung quer oder parallel zur Magnetisierungsrichtung der Magnete ausgerichtet ist, und wobei die Hauptausdehnungsrichtung quer oder parallel zu einem zwischen den Magneten befindlichen Abschnitt eines Bewegungspfads ausgerichtet ist.

Wenn die Hauptausdehnungsrichtung quer zu dem Abschnitt des Bewegungspfads ausgerichtet ist, sind die Magnete bevorzugt so ausgerichtet, dass dem Nordpol des ersten Magneten ein Südpol des zweiten Magneten gegenüber liegt. Auf diese Weise wird eine möglichst parallele Ausrichtung der magnetischen Feldlinien und eine möglichst große magnetische Flussdichte im Bereich der Spule erreicht.

Wenn die Hauptausdehnungsrichtung parallel zu dem Abschnitt des Bewegungspfads ausgerichtet ist, sind die Magnete bevorzugt so ausgerichtet, dass ihre Magnetisierungsrichtungen parallel zur Hauptausdehnungsrichtung ausgerichtet sind. Auf diese Weise wird ebenfalls eine möglichst parallele Ausrichtung der magnetischen Feldlinien und eine möglichst große magnetische Flussdichte im Bereich der Spule erreicht.

Gemäß einer Ausführungsart weist eine Stromerzeugungseinheit einen dritten und einen vierten Magneten auf, die am Gehäuse befestigt sind und zwischen denen die Spule angeordnet ist, wobei zwischen Spule und drittem Magnet das Magnetfeldmanipulationsmittel angeordnet ist, das zwischen Spule und erstem Magneten angeordnet ist, zwischen Spule und viertem Magnet das Magnetfeldmanipulationsmittel angeordnet ist, das zwischen Spule und zweiten Magneten angeordnet, der erste Magnet gegenüber von dem zweiten Magneten angeordnet ist und der dritte Magnet gegenüber von dem vierten Magnet angeordnet ist.

Durch die Verwendung von vier Magneten können die magnetischen Feldlinien, die von den jeweiligen Magneten ausgehen, besonders flexibel geführt werden, um eine hohe Effizienz und magnetische Flussdichte im Bereich der Spule zu ermöglichen.

Bevorzugt sind bei dieser Ausführungsart die Hauptausdehnungsrichtung der Spule parallel zu dem Abschnitt des Bewegungspfads, die Magnetisierungsrichtungen der Magnete quer zu dem Abschnitt des Bewegungspfads, die Nordpole von erstem und zweitem Magneten zueinander zeigend und die Südpole von drittem und viertem Magneten zueinander zeigend ausgerichtet. Bei dieser Konfiguration wird eine besonders große magnetische Flussdichte im Bereich der Spule erreicht.

Gemäß einer Ausführungsart bestehen die Manipulationssegmente aus einem ersten, ferromagnetischen Material oder aus einem zweiten, paramagnetischen, diamagnetischen oder ferrimagnetischen Material. Die Manipulationssegmente bestehen somit abwechselnd aus einem ferromagnetischen Material oder einem paramagnetischen, diamagnetischen oder ferrimagnetischen Material. Es kann sich also beispielsweise ein Manipulationssegment, das aus Luft besteht, mit einem Manipulationssegment aus Eisen abwechseln.

Wenn sich ein Manipulationssegment, das aus einem ferromagnetischen Material gebildet ist, in dem Zwischenraum befindet, herrscht ein verhältnismäßig niedriger magnetischer Widerstand zwischen dem ersten und zweiten Magneten. Sobald sich das Magnetfeldmanipulationsmittel bewegt, gelangt ein Manipulationssegment, das aus dem zweiten Material gebildet ist, in den Zwischenraum. Dann befindet sich im Zwischenraum ein Manipulationssegment, das aus einem diamagnetischen, paramagnetischen oder ferrimagnetischen Material gebildet ist. Im Vergleich ist dadurch der magnetische Widerstand im Zwischenraum erhöht. In der Folge wird auch die magnetische Flussdichte des Magnetfeldes, in dem sich die Spule befindet, verringert. In Folge einer solchen zeitvariablen Veränderung der magnetischen Flussdichte wird eine Spannung in der Spule induziert, die zu einem Stromfluss führt.

Gemäß einer Ausführungsart sind alle Magnetfeldmanipulationsmittel fest miteinander verbunden. Dadurch weisen die Magnetfeldmanipulationsmittel und die mit den Magnetfeldmanipulationsmitteln verbundenen Manipulationssegmente jeweils feste Posen zueinander auf. Dadurch kann eine gemeinsame Bewegung der Magnetfeldmanipulationsmittel geschehen, sodass eine möglichst zielgerichtete und effiziente Veränderung des Magnetfeldes geschehen kann.

Gemäß einer Ausführungsart weisen das erste und das zweite Magnetfeldmanipulationsmittel jeweils gleich viele Manipulationssegmente auf. Die Manipulationssegmente sind dabei so angeordnet, dass die Manipulationssegmente des ersten Magnetfeldmanipulationsmittels jeweils aus denselben Materialien bestehen wie die Manipulationssegmente des zweiten Magnetfeldmanipulationsmittels, zu denen sie den geringsten Abstand aufweisen. Mit anderen Worten bedeutet dies, dass einander gegenüberliegende Manipulationssegmente aus denselben Materialien gebildet sind. Dies unterstützt eine möglichst zielgerichtete Änderung des Magnetfeldes.

Gemäß einer weiteren Ausführungsart weisen die Manipulationssegmente eine Fläche auf, die mindestens so groß ist, wie die von der Spule eingeschlossene Fläche. Die Manipulationssegmente sind somit dazu geeignet, die gesamte Spule aus Sicht der Magneten zu verdecken. Durch diese verhältnismäßig große räumliche Ausdehnung wird ermöglicht, dass die magnetischen Feldlinien so durch die Manipulationssegmente verändert werden können, dass eine ausreichend große Änderung der magnetischen Flussdichte des Magnetfeldes erreicht wird, um eine benötigte Spannung zu induzieren.

Gemäß einer Ausführungsart sind die Bewegungspfade konzentrische Kreise. Beide Magnetfeldmanipulationsmittel einer Stromerzeugungseinheit laufen somit auf konzentrischen Kreisen um. Bevorzugt weisen die Magnetfeldmanipulationsmittel und die Manipulationssegmente dabei in der Richtung des Bewegungspfads eine gekrümmte Form auf. Dies erlaubt eine einfache Bewegung durch einen Antrieb, der ein Drehmoment zur Verfügung stellt, wie beispielsweise einer Turbine. Ferner erlauben konzentrische Kreise insbesondere in Verbindung mit einer festen Verbindung zwischen den Magnetfeldmanipulationsmittel, dass diese über eine zentrale Lagerung gelagert sein können. Dadurch ist der mechanische Aufbau weiter vereinfacht.

Die Magnetfeldmanipulationsmittel und Spulen können dazu ausgebildet sein, mit gleichbleibender Drehrichtung und Drehzahl betrieben werden. Sie können aber auch mit alternierender Drehrichtung und/oder Drehzahl betrieben werden. Dies ist abhängig von dem Antrieb, an den sie mit den dazu entsprechend ausgebildeten Anschlussmitteln angeschlossen werden können.

Gemäß einer weiteren Ausführungsart sind mehrere Stromerzeugungseinheiten vorhanden, die eine Kreiseinheit bilden. Alle Stromerzeugungseinheiten einer Kreiseinheit sind entlang des Umfangs eines Kreises angeordnet, wobei sie vorzugsweise den gleichen Winkelabstand zueinander aufweisen. In der Folge weisen jeweils alle Spulen, ersten Magneten und zweiten Magneten denselben radialen Abstand zum Kreismittelpunkt auf. Ferner sind die jeweils zwischen ersten Magneten und Spule angeordneten Magnetfeldmanipulationsmittel der Stromerzeugungseinheiten miteinander verbunden, um ein zusammenhängendes Magnetfeldmanipulationsmittel zu bilden. Ebenfalls sind die jeweils zwischen zweiten Magneten und Spule angeordneten Magnetfeldmanipulationsmittel verbunden, um ein zusammenhängendes Magnetfeldmanipulationsmittel zu bilden. Es kann also zwischen einem ersten zusammenhängenden Magnetfeldmanipulationsmittel und einem zweiten zusammenhängenden Magnetfeldmanipulationsmittel unterschieden werden. Durch ein einzelnes Drehmoment werden die einem zusammenhängenden Magnetfeldmanipulationsmittel zugeordneten Magnetfeldmanipulationsmittel gleichzeitig bewegt, sodass die Magnetfelder, die zwischen den einzelnen Magneten der Stromerzeugungseinheiten wirken, gleichzeitig verändert werden. In der Folge kann im Vergleich zur Verwendung einer einzelnen Stromerzeugungseinheit ein vergrößerter Strom zur Verfügung gestellt werden. Mit einem einfachen mechanischen Aufbau kann dann eine große Leistung erzeugt werden.

Ferner kann der Radius des Kreises, entlang dessen Umfang die Stromerzeugungseinheiten angeordnet sind, verschieden groß ausgeführt werden. Insbesondere bei einem großen Radius und einer Vielzahl von Stromerzeugungseinheiten schließen zwei benachbarte Stromerzeugungseinheiten einen kleinen Winkel ein. Selbst wenn die Magnetfeldmanipulationsmittel mit einer relativ geringen Drehzahl bewegt werden, bewegen sich die verschiedenen Manipulationssegmente dennoch mit einer hohen Frequenz durch die entsprechenden Zwischenräume.

Vorzugsweise sind auch die zusammenhängenden Magnetfeldmanipulationsmittel miteinander verbunden, so dass alle Magnetfeldmanipulationsmittel des elektrischen Generators gleichzeitig durch ein einzelnes Drehmoment angetrieben werden können. Dadurch ist der mechanische Aufbau weiter vereinfacht.

Gemäß einer weiteren Ausführungsart sind mehrere Kreiseinheiten vorhanden, deren jeweilige Stromerzeugungseinheiten entlang konzentrischer Kreise mit verschiedenen Durchmessern angeordnet sind. Bei dieser Ausführungsart sind noch mehr Stromerzeugungseinheiten in dem Generator vorhanden, als bei der zuvor beschriebenen Ausführungsart. Dementsprechend ist auch die elektrische Leistung, die der Generator zur Verfügung stellen kann, gesteigert. Vorzugsweise sind erneut alle zusammenhängenden Magnetfeldmanipulationsmittel miteinander verbunden, sodass die gesteigerte elektrische Leistung durch einen besonders einfachen mechanischen Aufbau realisiert ist.

Gemäß einer Ausführungsart sind die Bewegungspfade parallele Geraden. Im Gegensatz zu den zuvor beschriebenen Ausführungsarten bewegen sich die Manipulationssegmente dann nicht auf Kreisbahnen. Die Magnetfeldmanipulationsmittel und Manipulationssegmente weisen dann in der Richtung des Bewegungspfads vorzugsweise keine gekrümmte, sondern eine gerade Form auf. Es sind mehrere Magnetfeldmanipulationsmittel hintereinander entlang der Geraden angeordnet. Durch eine alternierende mechanische Linearbewegung eines Antriebes, wie sie beispielsweise durch eine Kolbenmaschine erzeugt werden kann, können die Magnetfeldmanipulationsmittel in den jeweiligen Zwischenräumen hin und her bewegt werden. Auch so entsteht in der Folge ein abgreifbarer elektrischer Strom. Mit diesem besonders einfachen mechanischen Aufbau können auch verhältnismäßig einfache mechanische Antriebsmittel verwendet werden.

Gemäß einer weiteren Ausführungsart bilden mehrere Stromerzeugungseinheiten eine Lineareinheit. Die Spulen, ersten Magneten und zweiten Magneten der Stromerzeugungseinheiten sind jeweils entlang paralleler Geraden angeordnet. Mit anderen Worten bedeutet dies, dass die Spulen auf einer ersten Geraden, die ersten Magneten auf einer zweiten Geraden und die zweiten Magneten auf einer dritten Geraden angeordnet sind. Die zwischen ersten Magneten und Spule angeordneten ersten Magnetfeldmanipulationsmittel sind miteinander verbunden, um ein zusammenhängendes Magnetfeldmanipulationsmittel zu bilden. Auch die zweiten Magnetfeldmanipulationsmittel, die zwischen zweiten Magneten und Spule angeordnet sind, sind miteinander verbunden, um ein zusammenhängendes Magnetfeldmanipulationsmittel zu bilden. Die zusammenhängenden Magnetfeldmanipulationsmittel können als erstes und zweites zusammenhängendes Magnetfeldmanipulationsmittel bezeichnet werden. Analog zu der zuvor beschriebenen Ausführungsart, bei der mehrere Stromerzeugungseinheiten eine Kreiseinheit bilden, bilden bei dieser Ausführungsart mehrere Stromerzeugungseinheiten eine Lineareinheit. Wie bei der vorherigen Ausführungsart beschrieben, erlaubt ein einfacher mechanischer Antrieb, der eine Linearbewegung zur Verfügung stellt, eine gemeinsame Bewegung der jeweiligen miteinander verbundenen Magnetfeldmanipulationsmittel. Es wird eine größere elektrische Leistung zur Verfügung gestellt, als dies mit nur einer einzelnen Stromerzeugungseinheiten möglich wäre. Vorzugsweise sind, um einen besonders einfachen mechanischen Aufbau zu realisieren, die beiden zusammenhängenden Magnetfeldmanipulationsmittel miteinander verbunden, um ein einziges gemeinsames, zusammenhängendes Magnetfeldmanipulationsmittel zu bilden.

Gemäß einer weiteren Ausführungsart sind mehrere Lineareinheiten vorhanden und ihre jeweiligen Stromerzeugungseinheiten sind entlang paralleler Geraden angeordnet. Dabei gilt zu beachten, dass entlang einer Geraden nur Stromerzeugungseinheiten einer Lineareinheit angeordnet sind. Die verschiedenen Lineareinheit des Generators befinden sich somit auf separaten Geraden. Der Generator weist bei dieser Ausführungsart noch mehr Stromerzeugungseinheiten als bei der vorherigen Ausführungsart auf, sodass eine vergrößerte Leistung zur Verfügung gestellt werden kann. Vorzugsweise sind auch bei dieser Ausführungsart alle Magnetfeldmanipulationsmittel miteinander verbunden, um ein großes zusammenhängendes Magnetfeldmanipulationsmittel zu bilden, sodass in der Folge ein besonders einfacher Aufbau bereitgestellt werden kann.

Gemäß einer Ausführungsart sind die Magnetfeldmanipulationsmittel und die Magnetisierungsrichtungen sowie Magnetisierungen der Magnete der Stromerzeugungseinheiten so ausgebildet, dass auf die Magnetfeldmanipulationsmittel in Summe keine quer zu ihrem jeweiligen Bewegungspfad ausgerichtete Kraft wirkt.

Bei einer Anordnung in einer oder mehreren Kreiseinheiten können die Stromerzeugungseinheiten dazu über gleichartige Magneten verfügen, die in radialer Richtung dieselbe Magnetisierungsrichtung aufweisen, und rotationssymmetrisch entlang des jeweiligen Kreises so verteilt sind, dass immer jeweils zwei gleichartige Stromerzeugungseinheiten einander gegenüber angeordnet sind. Bei einer solchen Anordnung wirken auf die Magnetfeldmanipulationsmittel, sofern sie ebenfalls rotationssymmetrisch ausgebildet sind und gleichmäßig verteilte, den Stromerzeugungseinheiten zugeordnete Manipulationssegmente aufweisen, jeweils nur Drehmomente, weil sich die sonstigen Kräfte in der Summe aufheben. Die Belastung der Lagerung wird auf diese Weise reduziert.

Bei einer Anordnung in Lineareinheiten können die Stromerzeugungseinheiten dazu ebenfalls über gleichartige Magneten verfügen, wobei die Magnetisierungsrichtung der Magneten jeweils benachbarter Stromerzeugungseinheiten in Bezug auf den jeweiligen Bewegungspfad umgekehrt zueinander ausgerichtet ist. Ferner sind die Magnetfeldmanipulationsmittel so ausgebildet, dass sie über gleichmäßig verteilte, den jeweiligen Stromerzeugungseinheiten zugeordnete Manipulationssegmente aufweisen. Bei einer solchen Ausbildung heben sich die quer zum Bewegungspfad ausgerichteten, auf die Magnetfeldmanipulationsmittel wirkenden Kräfte auf und die Magnetfeldmanipulationsmittel erfahren in Summe nur eine Kraft, die entlang des Bewegungspfads wirkt.

Der Ausdruck "in Summe" bedeutet dabei, dass davon ausgegangen wird, dass ein Magnetfeldmanipulationsmittel biegesteif ist und die einzelnen Kraftbeiträge summarisch in einer Kraft zusammengefasst werden können.

Gemäß einer weiteren Ausgestaltung sind die Spulen der Kreiseinheiten und/oder Lineareinheiten so verschaltet, dass über dazu ausgebildete elektronische Komponenten eine Gleich- oder Wechselspannung abgreifbar ist. Dazu geeignet sind insbesondere entsprechende mechanische Kommutatoren oder Wechsel- bzw. Gleichrichter.

Gemäß einer weiteren Ausführungsart sind die Manipulationssegmente eines Magnetfeldmanipulationsmittels durch einen Rahmen gehalten. Dazu weist der Rahmen eine Verbindung zu den Manipulationssegmenten auf. In der Folge sind die Manipulationssegmente durch den Rahmen in einer festen Anordnung zueinander fixiert. Das ermöglicht eine gemeinsame Bewegung der jeweils miteinander verbunden Magnetfeldmanipulationsmittel. Im eingebauten Zustand kann der Rahmen oberhalb oder unterhalb der Zwischenräume angeordnet sein, er kann sich in der Bewegungsrichtung entlang des Bewegungspfads aber auch zwischen den Manipulationssegmenten erstrecken. Sofern sich der Rahmen in der Richtung des Bewegungspfads zwischen den anderen Manipulationssegmenten erstreckt, stellt auch er ein Manipulationssegment bzw. mehrere Manipulationssegmente bereit.

Der Rahmen kann beispielsweise ein Blech mit Aussparungen sein, in die Einsätze mit einem weiteren Material eingesetzt sein können oder die leer bleiben. In einem eingebauten Zustand würden die Aussparungen hintereinander durch den Zwischenraum bewegt werden, wobei sich dann abwechselnd Rahmenmaterial und Aussparung (mit oder ohne Einsatz) im Zwischenraum befinden würde. Die Manipulationssegmente wäre dann abwechselnd durch Rahmenmaterial und durch Luft in den Aussparungen gebildet.

Vorzugsweise ist der Rahmen mit den Lagermitteln verbunden, sodass die Manipulationssegmente über den Rahmen entlang des Bewegungspfads geführt sind.

Gemäß einer weiteren Ausführungsart ist die mindestens eine Stromerzeugungseinheiten so auf dem Gehäuse montiert sind, dass die Magneten, die mindestens eine Spule und die Manipulationssegmente der Magnetfeldmanipulationsmittel senkrecht zu einer ebenen Bezugsfläche des Gehäuses ausgerichtet sind. Es handelt sich um einen besonders einfachen Aufbau, der mit einfachen Mitteln herstellbar ist. Ferner können bei der Fertigung die einzelnen genannten Komponenten von oben einfach auf der Grundplatte montiert werden.

Gemäß einer weiteren Ausführungsart weist mindestens eine Stromerzeugungseinheiten eine zweite Spule und ein drittes Magnetfeldmanipulationsmittel auf. Die zweite Spule ist auf einer Seite des ersten oder zweiten Magneten angeordnet, die von der zwischen den Magneten angeordneten Spule abgewandt ist. Das dritte Magnetfeldmanipulationsmittel ist zwischen der zweiten Spule und dem ihr nächsten ersten oder zweiten Magneten angeordnet.

Auch die dritten Magnetfeldmanipulationsmittel sind mit Lagermitteln derart beweglich an dem Gehäuse befestigt, dass sie entlang eines gehäusefesten Bewegungspfads bewegbar sind. Ferner weisen auch sie mehrere Manipulationssegmente gemäß den Erläuterungen zu den ersten und zweiten Magnetfeldmanipulationsmittel auf und sind aus verschiedenen Materialien gebildet, wobei sich insbesondere deren Permeabilitäten und/oder die Magnetisierungsrichtungen und/oder Magnetisierungen unterscheiden kann.

Das Magnetfeld des ersten oder zweiten Magneten, der der zweiten Spule am nächsten ist, wirkt auch auf die zweite Spule, sodass an dieser infolge einer Bewegung der dritten Magnetfeldmanipulationsmittel ebenfalls ein Strom abgreifbar ist. Es wird also das Magnetfeld auf beiden Seiten dieses Magneten verwendet. Die Bereitstellung einer zweiten Spule und eines dritten Magnetfeldmanipulationsmittels ermöglicht somit mit einer geringfügigen Erweiterung des Aufbaus, eine höhere Leistung zur Verfügung zu stellen.

Gemäß einer weiteren Ausführungsart sind mindestens zwei Stromerzeugungseinheiten vorhanden, die sich einen Magneten teilen, indem sie so zueinander angeordnet sind, dass der erste Magnet der einen Stromerzeugungseinheit den zweiten Magneten der anderen Stromerzeugungseinheit darstellt. Vorzugsweise weisen diese beiden oder nur einer der beiden Stromerzeugungseinheiten die Merkmale einer Ausführungsform auf, die ein drittes Magnetfeldmanipulationsmittel aufweist. Dabei können die beiden Stromerzeugungseinheiten verschiedenen Kreiseinheiten oder Lineareinheiten zugehörig sein. Bevorzug teilen sich alle Stromerzeugungseinheiten einer Kreis- oder Lineareinheit jeweils einen Magneten mit einer Stromerzeugungseinheit einer anderen Kreis- oder Lineareinheit. Durch eine solche kombinierte Nutzung der Magneten, kann der Bauraum möglichst effektiv ausgenutzt werden, um eine hohe Leistungsdichte zu erreichen. Dazu ist es insbesondere sinnvoll, wenn die Magnetfelder der außen und/oder innen liegenden Magnete bei der Verwendung mehrere Kreis- oder Lineareinheiten ebenfalls jeweils auf eine Spule wirken.

Nachfolgend wird die Erfindung anhand von Ausführungsbeispielen weiter erläutert, die in den Zeichnungen dargestellt sind. In den Zeichnungen zeigen:
Fig. 1: eine Ansicht von oben auf einen ersten Generator mit einer Stromerzeugungseinheiten;
Fig. 2: eine Ansicht von oben auf den ersten Generator nach einer Verlagerung des Magnetfeldmanipulationsmittel;
Fig. 3: eine seitliche Ansicht des ersten Generators;
Fig. 4: eine Ansicht von oben auf einen zweiten elektrischen Generator;
Fig. 5: eine Ansicht von oben auf einen dritten Generator, der über eine zweite Spule verfügt;
Fig. 6: eine Ansicht von oben auf einen vierten Generator, der zwei Kreiseinheiten aufweist;
Fig. 7: eine Ansicht von oben auf einen fünften Generator der eine Lineareinheit aufweist;
Fig. 8: eine Ansicht von vorne auf ein Magnetfeldmanipulationsmittel mit einem Rahmen;
Fig. 9: eine Schnittansicht von oben auf das Magnetfeldmanipulationsmittel der vorherigen Figur und
Fig. 10: eine Ansicht von oben auf einen weiteren Generator.

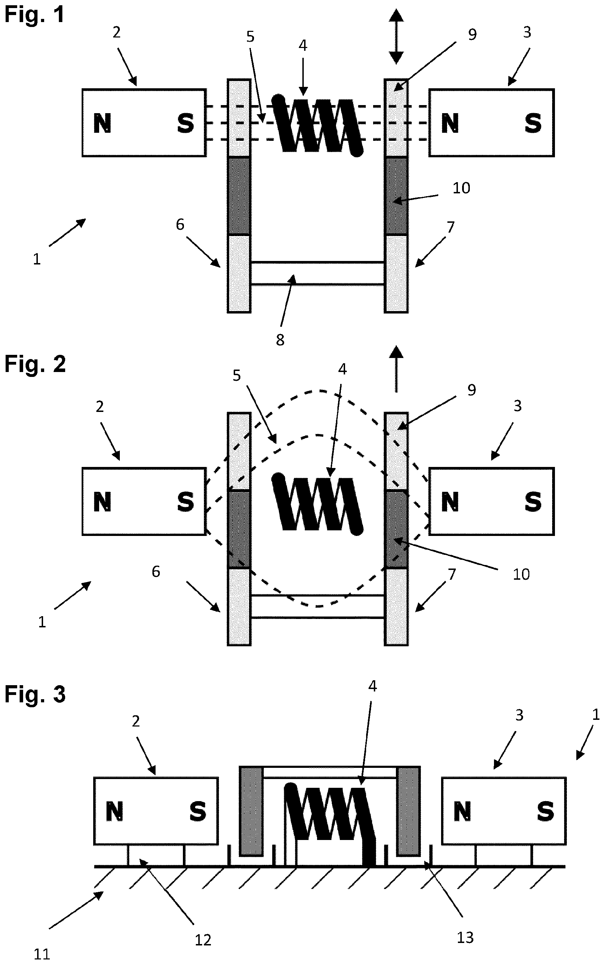

Fig. 1 zeigt eine Ansicht von oben auf einen ersten Generator 1. Der Generator 1 weist einen ersten Magneten 2 und einen zweiten Magneten 3 auf. Zwischen den Magneten 2, 3 ist eine Spule 4 angeordneten. Diese befindet sich in dem Magnetfeld, das zwischen dem ersten Magneten 2 und dem zweiten Magneten 3 verläuft, und durch die Feldlinien 5 dargestellt ist. In den jeweiligen Zwischenräumen zwischen dem ersten Magneten 2 und dem zweiten Magneten 3 sowie der Spule 4 befinden sich die Magnetfeldmanipulationsmittel 6, 7. Wie durch den Doppelpfeil im oberen Teil der Fig. 1 dargestellt ist, können die Magnetfeldmanipulationsmittel 6, 7 bewegt werden.

Die Magnetfeldmanipulationsmittel 6, 7 sind dabei durch den Steg 8 verbunden, sodass sie sich gemeinsam bewegen. Sowohl das Magnetfeldmanipulationsmittel 6 als auch das Magnetfeldmanipulationsmittel 7 bestehen aus mehreren Manipulationssegmenten, die aus verschiedenen Materialien gebildet sind, was durch die verschiedenen Schattierungen dargestellt ist. Manipulationssegmente mit derselben Schattierung sind dabei aus demselben Material gebildet. Zwei beispielhafte, verschiedene Materialien aufweisende Manipulationssegmente 8, 9 sind mit entsprechenden Bezugszeichen gekennzeichnet. Durch eine Bewegung entlang des durch den Doppelpfeil angedeuteten Bewegungspfads werden verschiedene Manipulationssegmente in die Zwischenräume zwischen den Magneten 2, 3 und der Spule 4 bewegt, sodass sich dann verschiedene Materialien in den jeweiligen Zwischenräumen befinden.

Fig. 2 zeigt ebenfalls eine Ansicht von oben auf den Generator 1. In dieser Darstellung wurden das Magnetfeldmanipulationsmittel 6 und 7 in der Zeichnungsrichtung nach oben bewegt. Dadurch befindet sich nicht mehr nur das Manipulationssegment 9 im Zwischenraum zwischen der Spule 4 und dem zweiten Magneten 3, sondern auch ein Teil des Manipulationssegmentes 10. Das Manipulationssegment 10 ist aus einem Material mit niedrigerer Permeabilität gebildet, als das Manipulationssegment 9. In der Folge dieser Verlagerung der Magnetfeldmanipulationsmittel 6, 7 kommt es zu einer Verformung der Feldlinien 5. Aufgrund der höheren Permeabilität des Manipulationssegmentes 9 verlaufen durch dieses auch mehr Feldlinien 5, obwohl es nicht mehr ausschließlich in dem Zwischenraum zwischen Magneten 3 und Spule 4 angeordnet ist. Das hat zur Folge, dass das Magnetfeld im Bereich der Spule 4 im Vergleich zum in Fig. 1 dargestellten Zustand eine niedrigere magnetische Flussdichte aufweist.

Es ist nachvollziehbar, dass eine solche Bewegung der Magnetfeldmanipulationsmittel 6, 7 dazu führt, dass eine Spannung in der Spule 4 induziert wird. Allerdings strebt das Magnetfeld den Zustand niedrigster Energie an, sodass einer Bewegung der Magnetfeldmanipulationsmittel 6, 7, die dazu führt, dass das Manipulationssegmente 9 aus dem Spalt bewegt wird, eine Kraft entgegensteht.

Diese Kraft zu überwinden entspricht im kontinuierlichen Betrieb der Leistungen, die von dem an den Generator angeschlossenen Antrieb bereitgestellt werden muss. Die Magnetfeldmanipulationsmittel 6, 7 weisen zum Anschluss an einen solchen Antrieb entsprechende Anschlussmittel auf, die nicht dargestellt sind. Es kann sich insbesondere um einen mechanischen Antrieb wie eine Turbine handeln.

Fig. 3 zeigt eine Ansicht von der Seite auf den Generator 1. Es ist zu erkennen, dass der Generator 1 über das Gehäuse 11 verfügt. Mittels Verbindungssockeln wie dem Verbindungssockel 12 sind die Magneten 2, 3 mit dem Gehäuse 11 verbunden. Auch die Spule 4 ist fest mit dem Gehäuse 11 verbunden. Ferner ist zu erkennen, dass die Magnetfeldmanipulationsmittel 6, 7 durch eine Linearführungen wie die Linearführung 13 geführt werden. Die Linearführungen geben die Bewegungspfade vor, entlang dem sich die Magnetfeldmanipulationsmittel 6, 7 bewegen können, die in den Fig. 1 und 2 durch die entsprechenden Pfeile angedeutet sind.

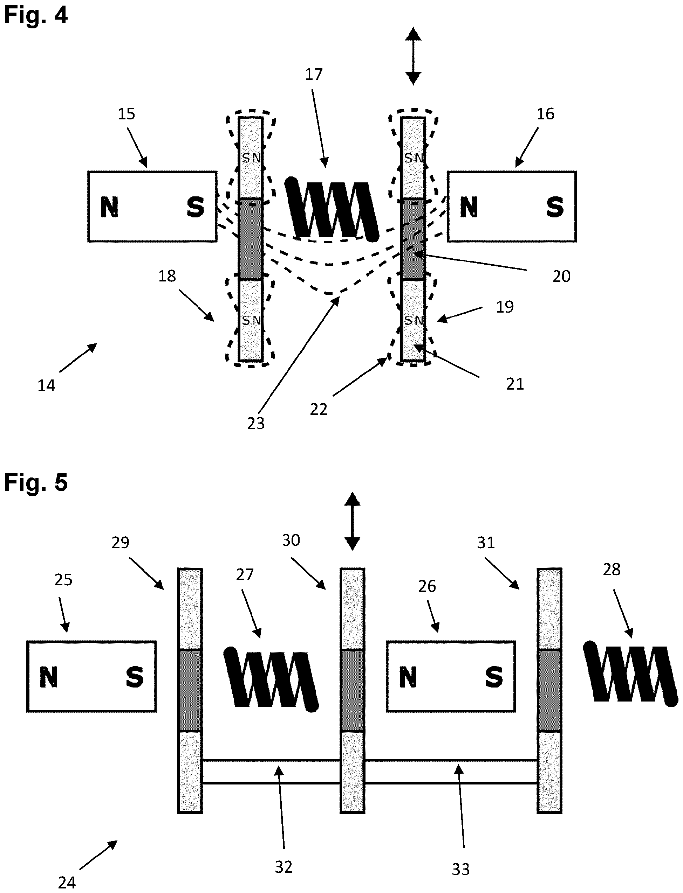

Fig. 4 zeigt eine Ansicht von oben auf einen zweiten Generator 14. Auch der Generator 14 weist zwei Magnete 15, 16 auf. Zwischen den Magneten 15, 16 ist die Spule 17 angeordnet. Ferner sind in den Zwischenräumen zwischen den Magneten 15, 16 und der Spule 17 Magnetfeldmanipulationsmittel 18, 19 angeordnet. Ebenso wie bei dem ersten Generator 1 bestehen die Magnetfeldmanipulationsmittel 18, 19 aus verschiedenen Manipulationssegmenten. Die verschiedene Schattierung der Manipulationssegmente zeigt erneut an, dass es sich um unterschiedliche Materialien handelt, wobei zwei Manipulationssegmente 20, 21 mit verschiedenen Materialen beispielhaft mit Bezugszeichen versehen sind. Die dunklen Manipulationssegmente, wie das Manipulationssegment 21, sind Magnete. Dies wird durch die Feldlinien 22 verdeutlicht. Es ist erkennbar, dass die Magnetfelder der Manipulationssegmente der Magnetfeldmanipulationsmittel 18, 19 mit dem Magnetfeld 23 interagieren, das sich zwischen den Magneten 15 und 16 erstreckt. Es zu erkennen, dass infolge der Interaktion zwischen den Magnetfeldern die Magnetfeldlinien 23 so verformt werden, dass die magnetische Flussdichte im Bereich der Spule 17 niedriger ist, als sie wäre, wenn die hellen Manipulationssegmente wie das Manipulationssegment 20 im Zwischenraum angeordnet wären. Sobald die Magnetfeldmanipulationsmittel 18, 19 in Zeichnungsrichtung nach oben verlagert werden, sodass die nicht magnetisierten Manipulationssegmente im Zwischenraum zwischen den Magnet 15, 16 und der Spule 17 angeordnet sind, wird es zu einer erneuten Veränderung der Magnetfeldlinien 23 kommen, sodass diese wieder annähernd parallel zueinander ausgerichtet sind und dementsprechend das Magnetfeld eine höhere magnetische Flussdichte in dem Bereich aufweist, in dem die Spule 17 angeordnet ist. Infolge der Bewegung der Magnetfeldmanipulationsmittel 18, 19 und ihrer Manipulationssegmente kommt es zu einer Spannungsinduktion in der Spule 17.

Fig. 5 zeigt eine Ansicht von oben auf einen dritten Generator 24. Der dritte Generator 24 weist ebenfalls zwei Magnete 25, 26 auf. Allerdings weiß er nicht nur eine Spule, sondern zwei Spulen 27, 28 auf. Die Spule 27 ist zwischen den Magneten 25 und 26 angeordnet, während die Spule 28 in der Zeichnungsrichtung rechts neben dem Magneten 26 angeordnet ist, d. h. auf der Seite des Magneten 26, die der Spule 27 abgewandt ist. In allen Zwischenräumen zwischen den Magneten 27 und 26 und den Spulen 27 und 28 befinden sich Magnetfeldmanipulationsmittel 29, 30, 31, welche über Stege 32 und 33 einander verbunden sind. Durch einen in Richtung des Doppelpfeils angedeuteten Bewegungspfad können die Magnetfeldmanipulationsmittel 29, 30, 31 bewegt werden. Infolge der Bewegung kommt es in den Spulen 27, 28 zu einer Induktion aufgrund der zuvor erläuterten physikalischen Vorgänge.

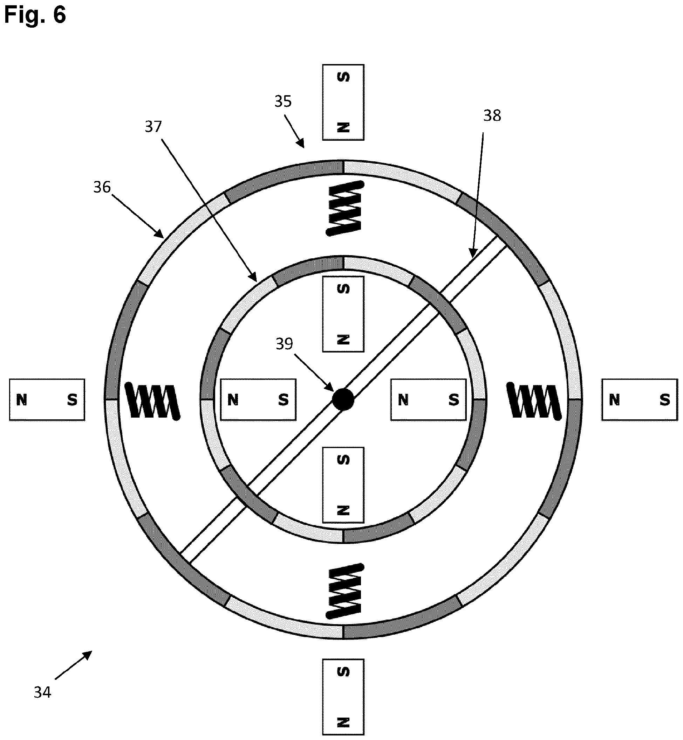

Fig. 6 zeigt eine Ansicht von oben auf einen vierten Generator 34. Der Generator 34 verfügt neben der Stromerzeugungseinheit 34 über drei weitere separate Stromerzeugungseinheiten, während die ersten drei Generatoren 1, 14, 34 jeweils aus einer einzelnen Stromerzeugungseinheit gebildet sind. Die vier Stromerzeugungseinheiten sind entlang des Umfangs eines Kreises angeordnet. Dabei sind die jeweiligen Magneten und Spulen jeweils auf einem Kreis angeordnet, wobei die drei Kreise, auf den die ersten Magnete bzw. Spulen bzw. zweiten Magneten liegen, konzentrische Kreise sind. Ferner sind zwischen den Magneten und Spulen Magnetfeldmanipulationsmittel 36, 37 angeordnet.

Dabei sind alle Magnetfeldmanipulationsmittel, die sich in den Zwischenräumen zwischen den ersten Magneten und der Spule befinden miteinander verbunden, um ein zusammenhängendes Magnetfeldmanipulationsmittel 36 zu bilden. Alle Magnetfeldmanipulationsmittel, die zwischen den Spulen und zweiten Magneten angeordnet sind, sind ebenfalls miteinander verbunden, um ein zweites zusammenhängendes Manipulation 37 zu bilden. Die zusammenhängenden Magnetfeldmanipulationsmittel 36 und 37 sind durch Stege wie den Steg 38 miteinander verbunden, sodass sie gemeinsam durch ein einziges Drehmoment bewegt werden können. Die Stege sind mit einer zentralen Lagerung 39 verbunden, sodass lediglich ein Lager benötigt wird, was den mechanischen Aufbau stark vereinfacht. Durch eine Drehung der Magnetfeldmanipulationsmittel 36, 37 wird eine Spannung in die vier Spulen der vier Stromerzeugungseinheiten induziert, die jeweils zu einem abgreifbaren Stromfluss führen. Der vierte Generator 34 erlaubt somit, eine höhere Leistung bereitzustellen, als die ersten drei Generatoren 1, 14, 34.

Es müssen bei einem solchen Generator 34, obwohl er in der Lage ist, eine hohe Leistung zu liefern, nur die Magnetfeldmanipulationsmittel 36, 37 bewegt werden, und nicht die Magnete. Dadurch wird der mechanische Aufbau stark vereinfacht, weil weniger Masse bewegt werden muss, als dies bei einem konventionellen Generator der Fall ist. Insbesondere kann auf Lager verzichtet werden, die bei einem konventionellen Generator nötig sind, um den Rotor abzustützen, auf dem die Magnete aufgebracht sind.

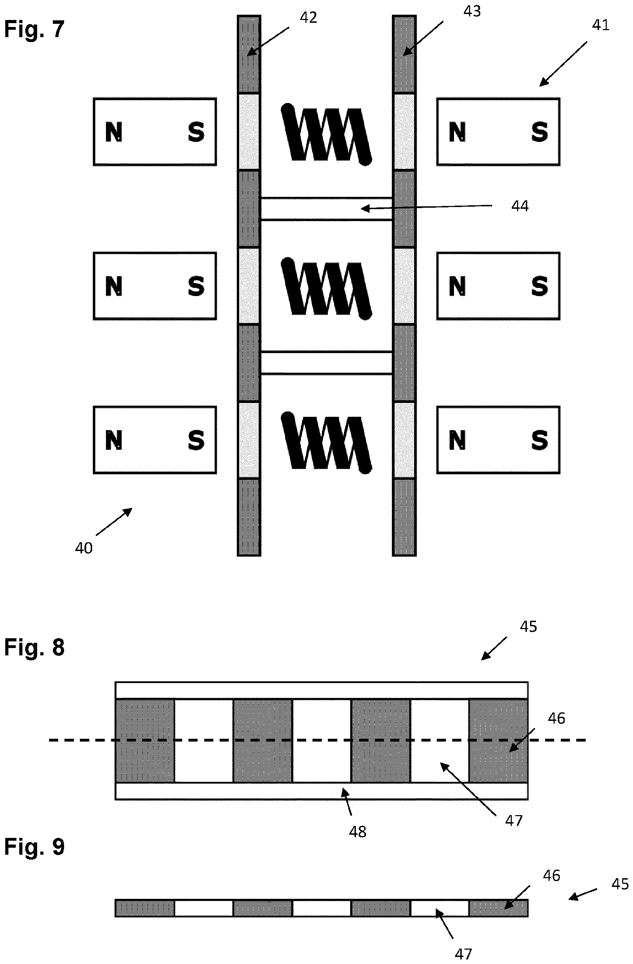

Fig. 7 zeigt eine Ansicht von oben auf einen fünften Generator 40. Der Generator 40 weist drei Stromerzeugungseinheiten 41 auf. Wie bei dem vierten Generator 34 weist jede Stromerzeugungseinheiten 41 jeweils einen ersten und zweiten Magneten sowie eine Spule auf. Die Magnetfeldmanipulationsmittel sind dabei erneut zu zusammenhängenden Magnetfeldmanipulationsmittel 42, 43 verbunden. Die Magnetfeldmanipulationsmittel 42, 43 sind über die Stege wie den Steg 44 verbunden.

Durch eine lineare Bewegung der Magnetfeldmanipulationsmittel 42 und 43 kann ein Strom in den Spulen induziert werden. Im Gegensatz zum vierten Generator 34 wird keine Rotationsbewegung benötigt. Stattdessen wird dieser Generator 40 mit einer Linearbewegung betrieben, die beispielsweise durch eine Kolbenmaschine bereitgestellt werden kann.

Fig. 8 zeigt eine Ansicht von vorne auf ein Magnetfeldmanipulationsmittel 45. Dieses besteht abwechselnd aus Manipulationssegmenten, die aus verschiedenen Materialien gebildet sind, wie auch durch die verschieden dunklen Schattierungen verdeutlicht wird. Beispielhaft sind die Manipulationssegmenten 46 und 47, die jeweils aus einem verschiedenen Material bestehen, mit Bezugszeichen versehen. Die Manipulationssegmente sind durch den Rahmen 48 gehalten. Dabei ist der Rahmen ober- und unterhalb der Manipulationssegmente angeordnet. Der Rahmen 48 nimmt die auf die Manipulationssegmente wirkenden Kräfte auf und ermöglicht somit eine einfache, gemeinsam Verlagerung der Manipulationssegmente.

Bei Verwendung eines Rahmens 48 müssen nicht alle Manipulationssegmente aus einem Feststoff gebildet sein. In dem gezeigten Ausführungsbeispiel kann beispielsweise das Manipulationssegment 46 aus Eisen gebildet sein, während das Manipulationssegment 47 aus Luft gebildet sein kann.

Fig. 9 zeigt eine Schnittansicht von oben auf das Magnetfeldmanipulationsmittel 47. Der Schnitt verläuft dabei durch die Mitte der Ansicht aus Fig. 8, wie durch die gestrichelte Linie dargestellt ist. In Fig. 9 wird verdeutlicht, dass die beiden Manipulationssegmente 46, 47 aus verschiedenen Materialien bestehen.

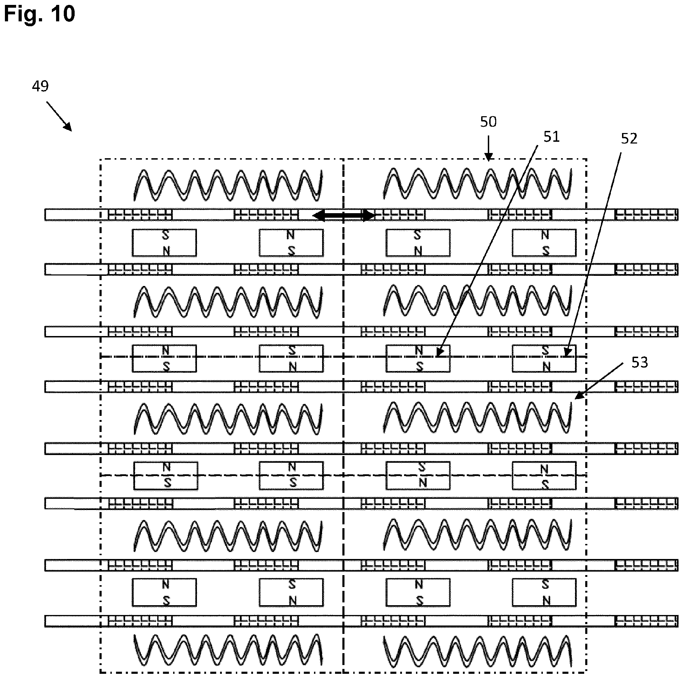

Fig. 10 zeigt eine Ansicht von oben auf einen weiteren Generator 49. Der Generator 49 weist sechs Stromerzeugungseinheiten auf, wobei die außen gelegenen Stromerzeugungseinheiten jeweils über zwei Spulen verfügen. Die Strichpunkt-Linien zeigen, welche Spulen, Magnete und Magnetfeldmanipulationsmittel jeweils eine Stromerzeugungseinheit bilden. So wird auch deutlich, dass jede Stromerzeugungseinheit vier Magnete aufweist, wobei sich die beiden innen gelegenen Stromerzeugungseinheiten die Magneten mit benachbarten Stromerzeugungseinheiten teilen. Die Stromerzeugungseinheit 50 verfügt beispielsweise über vier Magnete, von denen sie sich die beiden innen angeordneten Magnete 51, 52 mit der Stromerzeugungseinheit 53 teilt.

Die durch den Doppelpfeil verdeutlichten Bewegungspfade der Magnetfeldmanipulationsmittel sind bei diesem Ausführungsbeispiel parallel zu den Hauptausdehnungsrichtungen der Spulen ausgerichtet. Ferner sind die Magnete so ausgerichtet, dass ihre Magnetisierungsrichtungen quer zu den Bewegungspfaden ausgerichtet sind und entlang des Bewegungspfads benachbarte Magnet eine alternierende Anordnung von Nord- und Südpol aufweisen (vgl. Magnete 51, 52). Diese Anordnung sorgt dafür, dass sich Feldlinien im Bereich der Spule ergeben können, die parallel zu der Hauptausrichtung der jeweiligen Spule sind. So wird eine besonders große magnetische Flussdichte im Bereich der Spulen erreicht.

### Bezugszeichen:

- 1: Generator
- 2: Erster Magnet
- 3: Zweiter Magnet
- 4: Spule
- 5: Feldlinien
- 6: Erstes Magnetfeldmanipulationsmittel
- 7: Zweites Magnetfeldmanipulationsmittel
- 8: Verbindungssteg
- 9: Manipulationssegment
- 10: Manipulationssegment
- 11: Gehäuse
- 12: Verbindungssockel
- 13: Linearführung
- 14: Generator
- 15: Zweiter Erster Magnet
- 16: Magnet
- 17: Spule
- 18: Erstes Magnetfeldmanipulationsmittel
- 19: Zweites Magnetfeldmanipulationsmittel
- 20: Manipulationssegment
- 21: Manipulationssegment
- 22: Feldlinien
- 23: Feldlinien
- 24: Generator
- 25: Erster Magnet
- 26: Zweiter Magnet
- 27: Erste Spule
- 28: Zweite Spule
- 29: Erstes Magnetfeldmanipulationsmittel
- 30: Zweites Magnetfeldmanipulationsmittel
- 31: Drittes Magnetfeldmanipulationsmittel
- 32: Steg
- 33: Steg
- 34: Generator
- 35: Stromerzeugungseinheit
- 36: Zusammenhängendes Magnetfeldmanipulationsmittel
- 37: Zusammenhängendes Magnetfeldmanipulationsmittel
- 38: Steg
- 39: Lagerung
- 40: Generator
- 41: Stromerzeugungseinheit
- 42: Zusammenhängendes Magnetfeldmanipulationsmittel
- 43: Zusammenhängendes Magnetfeldmanipulationsmittel
- 44: Steg
- 45: Magnetfeldmanipulationsmittel
- 46: Manipulationssegment
- 47: Manipulationssegment
- 48: Rahmen
- 49: Generator
- 50: Stromerzeugungseinheit
- 51: Magnet
- 52: Magnet
- 53: Stromerzeugungseinheit

## Patentansprüche

1. Elektrischer Generator (1, 14, 24, 34, 41, 49) mit einem Gehäuse (11) **gekennzeichnet durch**
a. mindestens eine Stromerzeugungseinheit (35, 41, 50, 53), die einen ersten und einen zweiten Magneten (2, 3, 15, 16, 25, 26, 50, 51), eine erste Spule (4, 17, 27) zur Stromerzeugung und ein erstes sowie ein zweites Magnetfeldmanipulationsmittel (6, 7, 18, 19, 29, 30, 45) umfasst, wobei
b. die Magneten (2, 3, 15, 16, 25, 26, 50, 51) sowie die Spule (4, 17, 27) an dem Gehäuse (11) befestigt sind,
c. die Spule (4, 17, 27) zwischen den Magneten (2, 3, 15, 16, 25, 26, 50, 51) angeordnet ist,
d. die Magnetfeldmanipulationsmittel (6, 7, 18, 19, 29, 30, 45) über Anschlussmittel zum Anschließen an einen mechanischen Antrieb verfügen,
e. jeweils ein Magnetfeldmanipulationsmittel (6, 7, 18, 19, 29, 30, 45) in einem Zwischenraum zwischen einem Magneten (2, 3, 15, 16, 25, 26, 50, 51) und der Spule (4, 17, 27) angeordnet ist,
f. die Magnetfeldmanipulationsmittel (6, 7, 18, 19, 29, 30, 45) mit Lagermittel (13) derart beweglich an dem Gehäuse (11) befestigt sind, dass sie jeweils entlang eines gehäusefesten Bewegungspfads bewegbar sind,
g. ein Magnetfeldmanipulationsmittel (6, 7, 18, 19, 29, 30, 45) jeweils mehrere Manipulationssegmente (9, 10, 20, 21, 46, 47) aufweist, die entlang des jeweiligen Bewegungspfads hintereinander angeordnet sind,
h. entlang eines Bewegungspfads direkt aufeinander folgende Manipulationssegmente (9, 10, 20, 21, 46, 47) jeweils eine verschiedene Dicke aufweisen und/oder aus unterschiedlichen Materialien gebildet sind, die sich dadurch unterscheiden, dass
i. sich die Permeabilität des Materials eines Manipulationssegmentes (9, 10, 20, 21, 46, 47) von den Permeabilitäten der Materialien der direkt vorher und hinterher angeordneten Manipulationssegmente (9, 10, 20, 21, 46, 47) unterscheidet und/oder
ii. sich die Magnetisierungsrichtung und/oder Magnetisierung des Materials eines Manipulationssegmentes (9, 10, 20, 21, 46, 47) von den Magnetisierungsrichtungen und/oder Magnetisierungen der direkt vorher und hinterher angeordneten Manipulationssegmente (9, 10, 20, 21, 46, 47) unterscheidet, und
i. die Bewegungspfade so verlaufen, dass bei einer Bewegung eines Magnetfeldmanipulationsmittels (6, 7, 18, 19, 29, 30, 45) dessen Manipulationssegmente (9, 10, 20, 21, 46, 47) durch den jeweiligen Zwischenraum bewegt werden.

2. Elektrischer Generator (1, 14, 24, 34, 41, 49) nach Anspruch 1, **dadurch gekennzeichnet, dass** die Manipulationssegmente (9, 10, 20, 21, 46, 47) aus einem ersten, ferromagnetischen Material oder aus einem zweiten, paramagnetischen, diamagnetischen oder ferrimagnetischen Material bestehen.

3. Elektrischer Generator (1, 14, 24, 34, 41, 49) nach Anspruch 1 oder Anspruch 2, **dadurch gekennzeichnet, dass** alle Magnetfeldmanipulationsmittel (6, 7, 18, 19, 29, 30, 45) fest miteinander verbunden sind.

4. Elektrischer Generator (1, 14, 24, 34, 41, 49) nach Anspruch 2 oder Anspruch 3, **dadurch gekennzeichnet, dass** das erste und zweite Magnetfeldmanipulationsmittel (6, 7, 18, 19, 29, 30, 45) jeweils gleich viele Manipulationssegmente (9, 10, 20, 21, 46, 47) aufweisen, wobei die Manipulationssegmente (9, 10, 20, 21, 46, 47) so angeordnet sind, dass die Manipulationssegmente (9, 10, 20, 21, 46, 47) des ersten Magnetfeldmanipulationsmittels (6, 7, 18, 19, 29, 30, 45) jeweils aus denselben Materialen bestehen wie die Manipulationssegmente (9, 10, 20, 21, 46, 47) des zweiten Magnetfeldmanipulationsmittels (6, 7, 18, 19, 29, 30, 45), zu denen sie den geringsten Abstand aufweisen.

5. Elektrischer Generator (1, 14, 24, 34, 41, 49) nach einem der vorstehenden Ansprüche, **dadurch gekennzeichnet, dass** die Manipulationssegmente (9, 10, 20, 21, 46, 47) eine Fläche aufweisen, die mindestens so groß ist, wie die von der Spule (4, 17, 27, 28) eingeschlossene Fläche.

6. Elektrischer Generator (1, 14, 24, 34, 41, 49) nach einem der vorstehenden Ansprüche, **dadurch gekennzeichnet, dass** die Bewegungspfade konzentrische Kreise sind.

7. Elektrischer Generator (1, 14, 24, 34, 41, 49) nach Anspruch 6, **dadurch gekennzeichnet, dass** mehrere Stromerzeugungseinheiten (35, 41, 50, 53) vorhanden sind, die eine Kreiseinheit bilden, wobei
a. alle Stromerzeugungseinheiten (35, 41, 50, 53) einer Kreiseinheit entlang des Umfangs eines Kreises angeordnet sind, sodass jeweils alle Spulen (4, 17, 27, 28), ersten Magneten (2, 15, 25) und zweiten Magneten (3, 16, 26) denselben radialen Abstand zum Kreismittelpunkt aufweisen,
b. die jeweils zwischen erstem Magneten (2, 15, 25) und Spule (4, 17, 27, 28) angeordneten Magnetfeldmanipulationsmittel (6, 18, 30, 45) miteinander verbunden sind, um ein zusammenhängendes Magnetfeldmanipulationsmittel (36) zu bilden, und
c. die jeweils zwischen zweiten Magneten (3, 16, 26) und Spule (4, 17, 27, 28) angeordneten Magnetfeldmanipulationsmittel (7, 19, 31, 45) miteinander verbunden sind, um ein zusammenhängendes Magnetfeldmanipulationsmittel (37) zu bilden.

8. Elektrischer Generator (1, 14, 24, 34, 41, 49) nach Anspruch 7, **dadurch gekennzeichnet, dass** mehrere Kreiseinheiten vorhanden sind, deren jeweilige Stromerzeugungseinheiten (35, 41, 50, 53) entlang konzentrischer Kreise mit verschiedenen Durchmessern angeordnet sind.

9. Elektrischer Generator (1, 14, 24, 34, 41, 49) nach einem der Ansprüche 1 bis 5, **dadurch gekennzeichnet, dass** die Bewegungspfade parallele Geraden sind.

10. Elektrischer Generator (1, 14, 24, 34, 41, 49) nach Anspruch 9, **dadurch gekennzeichnet, dass** mehrere Stromerzeugungseinheiten (35, 41, 50, 53) vorhanden sind, die eine Lineareinheit bilden, wobei
a. die Spulen (4, 17, 27, 28), ersten Magneten (2, 15, 25) und zweiten Magneten (3, 16, 26) der Stromerzeugungseinheit (35, 41, 50, 53) jeweils entlang paralleler Geraden angeordnet sind,
b. die zwischen ersten Magneten (2, 15, 25) und Spule (4, 17, 27, 28) angeordneten ersten Magnetfeldmanipulationsmittel (6, 18, 30, 45) miteinander verbunden sind, um ein zusammenhängendes Magnetfeldmanipulationsmittel (42) zu bilden, und
c. die zwischen zweiten Magneten (3, 16, 26) und Spule (4, 17, 27, 28) angeordneten zweiten Magnetfeldmanipulationsmittel (7, 19, 31, 45) miteinander verbunden sind, um ein zusammenhängendes Magnetfeldmanipulationsmittel (43) zu bilden.

11. Elektrischer Generator (1, 14, 24, 34, 41, 49) nach Anspruch 10, **dadurch gekennzeichnet, dass** mehrere Lineareinheiten vorhanden sind, deren jeweilige Stromerzeugungseinheiten (35, 41, 50, 53) entlang paralleler Geraden angeordnet sind.

12. Elektrischer Generator (1, 14, 24, 34, 41, 49) nach einem der Ansprüche 7, 8, 10 oder 11, **dadurch gekennzeichnet, dass** die Magnetfeldmanipulationsmittel (6, 7, 18, 19, 29, 30, 31, 36, 37, 42, 43, 45) und die Magnetisierungsrichtungen sowie Magnetisierungen der Magnete (2, 3, 15, 16, 25, 26, 50, 51) der Stromerzeugungseinheiten (35, 41, 50, 53) so ausgebildet sind, dass jeweils auf die Magnetfeldmanipulationsmittel (6, 7, 18, 19, 29, 30, 31, 36, 37, 42, 43, 45) in Summe keine quer zu ihrem jeweiligen Bewegungspfad ausgerichtete Kraft wirkt.

13. Elektrischer Generator (1, 14, 24, 34, 41, 49) nach einem vorstehenden Anspruch, **dadurch gekennzeichnet, dass** die Manipulationssegmente (9, 10, 20, 21, 46, 47) eines Magnetfeldmanipulationsmittels (6, 7, 18, 19, 29, 30, 31, 36, 37, 42, 43, 45) durch einen Rahmen (48) gehalten sind.

14. Elektrischer Generator (1, 14, 24, 34, 41, 49) nach einem der vorstehenden Ansprüche, **dadurch gekennzeichnet, dass** die mindestens eine Stromerzeugungseinheiten (35, 41, 50, 53) so auf dem Gehäuse (11) montiert sind, dass die Magneten (2, 3, 15, 16, 25, 26, 50, 51), die mindestens eine Spule (4, 17, 27, 28) und die Manipulationssegmente (9, 10, 20, 21, 46, 47) der Magnetfeldmanipulationsmittel (6, 7, 18, 19, 29, 30, 31, 36, 37, 42, 43, 45) senkrecht zu einer ebenen Bezugsfläche des Gehäuses (11) ausgerichtet sind.

15. Elektrischer Generator (1, 14, 24, 34, 41, 49) nach einem der vorstehenden Ansprüche, **dadurch gekennzeichnet, dass** mindestens eine Stromerzeugungseinheit (35, 41, 50, 53) eine zweite Spule (28) und ein drittes Magnetfeldmanipulationsmittel (31) aufweist, wobei die zweite Spule (28) auf einer Seite des ersten oder zweiten Magneten (2, 3, 15, 16, 25, 26, 50, 51) angeordnet ist, die von der zwischen den Magneten (2, 3, 15, 16, 25, 26, 50, 51) angeordneten Spule (4, 17, 27, 28) abgewandt ist, und das dritte Magnetfeldmanipulationsmittel (31) zwischen der zweiten Spule (28) und dem ihr nächsten ersten oder zweiten Magneten (2, 3, 15, 16, 25, 26, 50, 51) angeordnet ist.
